(19) Europäisches Patentamt
European Patent Office
Office européen des brevets

(11) Veröffentlichungsnummer: **0 499 867 A2**

(12) **EUROPÄISCHE PATENTANMELDUNG**

(21) Anmeldenummer: **92101757.0**

(51) Int. Cl.$^5$: **D06M 15/432**

(22) Anmeldetag: **04.02.92**

(30) Priorität: **22.02.91 DE 4105576**

(43) Veröffentlichungstag der Anmeldung:
**26.08.92 Patentblatt 92/35**

(84) Benannte Vertragsstaaten:
**AT BE CH DE DK ES FR GB IT LI NL PT SE**

(71) Anmelder: **Pfersee Chemie GmbH**
**Rehlinger Str. 1 Postfach 1153**
**W-8901 Langweid am Lech(DE)**

(72) Erfinder: **Mangold, Rudolf**
**Eichenstrasse 6**
**W-8901 Adelsried(DE)**
Erfinder: **Kästele, Xaver**
**Egerstrasse 8 b**
**W-8902 Neusäss(DE)**
Erfinder: **Koreny, Andrea**
**Brahmsstrasse 15**
**W-8900 Augburg(DE)**

(54) **Wässrige Zusammensetzungen für die Behandlung von Fasermaterialien.**

(57) Wäßrige Zusammensetzungen mit sehr guter Lagerstabilität auch bei hohen Konzentrationen und tiefen Temperaturen lassen sich erhalten, indem man in Wasser als Lösungsmittel aus Alkanphosphonsäuren und bestimmten organischen Basen, z.B. Guanylharnstoff, Salze bildet und diese Salze anschließend mit Formaldehyd umsetzt.

Die erfindungsgemäßen Zusammensetzungen eignen sich für die Flammfestausrüstung von Fasermaterialien.

EP 0 499 867 A2

Die Erfindung betrifft wäßrige Zusammensetzungen, welche durch Bildung eines Salzes oder Salzgemisches aus einer oder mehreren Alkylphosphonsäuren und einer oder mehreren stickstoffhaltigen organischen Basen und nachfolgende Umsetzung mit Formaldehyd erhalten werden können. Sie betrifft ferner die Verwendung solcher Zusammensetzungen für die Behandlung von Fasermaterialien, insbesondere von textilen Flächengebilden.

Aus der EP-A 0 057 668 ist es bekannt, phosphonsaure Salze organischer Stickstoffbasen, welche keine N-Methylolgruppen aufweisen, für die Flammfestausrüstung von Fasermaterialien zu verwenden. Die Salze werden hierzu in Form wäßriger Flotten eingesetzt. Die GB-PS 1 317 468 beschreibt ein Verfahren zur Flammfestausrüstung von Cellulosematerialien. Bei diesem Verfahren werden die Materialien mit wäßrigen Zusammensetzungen behandelt, welche eine Phosphonsäure und eine stickstoffhaltige organische Base enthalten. Diese Base kann, bevor sie zusammen mit der Phosphonsäure in Wasser gegeben wird, methyloliert worden sein.

Ein Nachteil der Zusammensetzungen, welche in der EP-A 0 057 668 beschrieben sind, besteht darin, daß die wäßrigen Zusammensetzungen eine nicht optimale Stabilität aufweisen. Insbesondere bei Temperaturen von weniger als 10 °C können Ausfällungen auftreten und zwar schon bei Salzkonzentrationen von etwa 25 Gew.%. Dieser Nachteil führt dazu, daß der Hersteller die wäßrigen Zusammensetzungen in relativ niedriger Konzentration an den Textilausrüster ausliefern und oft noch für die Einhaltung bestimmter Temperaturuntergrenzen bei Lagerung und Transport gesorgt werden muß.

Falls bei dem in der GB-PS 1 317 468 beschriebenen Verfahren methylolierte Basen in Kombination mit Phosphonsäuren eingesetzt werden, sind die Basen vor ihrer Vereinigung mit Phosphonsäure methyloliert worden. Wäßrige Systeme, die N-Methylolverbindungen der in der GB-PS genannten Art enthalten, sind jedoch nur über eine begrenzte Zeit stabil. Somit weisen die in der GB-PS genannten Zusammensetzungen den Nachteil auf, daß die methylolierte Base schon relativ kurze Zeit nach ihrer Herstellung mit Säure vereinigt werden muß. Aber auch dann werden noch keine wäßrigen Zusammensetzungen erhalten, welche über längere Zeit lagerstabil sind. Es hat sich nämlich gezeigt, daß durch das bloße Zusammengeben von Phosphonsäure und Stickstoffbase noch keine lagerstabilen wäßrigen Salzlösungen erhalten werden. Das bedeutet, daß der Hersteller von Zusammensetzungen gemäß GB-PS die Zusammensetzungen oder deren Einzelkomponenten relativ kurze Zeit nach ihrer Herstellung an den Textilausrüster ausliefern und daß dieser sie bald verwenden muß.

Der vorliegenden Erfindung lag die Aufgabe zugrunde, eine wäßrige Zusammensetzung mit methylolierten Salzen von Alkylphosphonsäuren und organischen stickstoffhaltigen Basen zur Verfügung zu stellen, welche eine verbesserte Lagerstabilität aufweist und welche eine geringe oder keine Vergilbungstendenz der damit ausgerüsteten Fasermaterialien bewirkt.

Die Aufgabe wurde gelöst durch eine wäßrige Zusammensetzung, welche durch folgende Verfahrensschritte hergestellt werden kann:

a) Bildung eines Salzes oder Salzgemisches aus einer Phosphonsäure der allgemeinen Formel

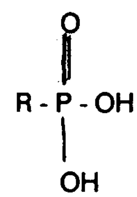

worin R einen gesättigten Alkylrest mit 1 bis 4 Kohlenstoffatomen darstellt, oder einem Gemisch solcher Phosphonsäuren und einer Base oder einem Gemisch von Basen, ausgewählt aus Dicyandiamid, Guanylharnstoff, Harnstoff, Guanidin, Cyanamid und Melamin in Wasser als Lösungsmittel

b) Umsetzung des bei Verfahrensschritt a) gebildeten Salzes oder Salzgemisches mit Formaldehyd

c) gegebenenfalls teilweise oder vollständige Veretherung des bei Schritt b) gebildeten Umsetzungsprodukts.

Überraschenderweise hat sich gezeigt, daß mit diesem Herstellungsverfahren wäßrige Zusammensetzungen erhalten werden, welche gegenüber den in der GB-PS 1 317 468 und in der EP-A 0 057 668 beschriebenen Zusammensetzungen Vorteile bezüglich Lagerstabilität aufweisen. Die erhöhte Lagerstabilität macht sich vor allem bei tieferen Temperaturen und höheren Salzkonzentrationen bemerkbar. Ein wesentlicher Unterschied zwischen den erfindungsgemäßen Zusammensetzungen und denen der GB-PS besteht darin, daß bei den Zusammensetzungen der GB-PS die Umsetzung der Base mit Formaldehyd (Methylolierung) vor der Vereinigung mit Phosphonsäure stattgefunden hat. Bei dem Verfahren, mit dem die erfindungsgemäßen Zusammensetzungen erhalten werden können, wird dagegen die Methylolierung erst nach Salzbildung durchgeführt.

Der erste Schritt (Verfahrensschritt a)) des zu erfindungsgemäßen Zusammensetzungen führenden Herstellungsverfahrens besteht darin, aus einer

Phosphonsäure der allgemeinen Formel

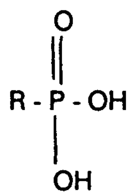

oder einem Gemisch solcher Phosphonsäuren und einer Base oder einem Gemisch von Basen in Wasser als Lösungsmittel ein Salz zu bilden. Der Rest R steht in der genannten Formel für einen Alkylrest mit 1 bis 4 Kohlenstoffatomen. Besonders günstige Ergebnisse werden erhalten, wenn man Methylphosphonsäure (R = $CH_3$) verwendet. Die Base bzw. das Basengemisch sind ausgewählt aus den oben genannten Verbindungen. Vorzugsweise verwendet man Dicyandiamid oder Guanylharnstoff

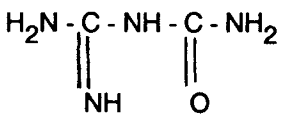

oder ein Gemisch dieser Verbindungen. Im Fall von Dicyandiamid als Ausgangssubstanz bilden sich in wäßriger Lösung in Anwesenheit einer Säure je nach Verfahrensbedingungen durch Hydrolyse mehr oder weniger große Anteile an Guanylharnstoff.

Das Verhältnis der für Verfahrensschritt a) eingesetzten Mengen an Säure und Base kann in weiten Bereichen schwanken, je nach gewünschtem pH-Wert. Vorzugsweise bemißt man die Mengen so, daß 0,8 bis 1,2 Mol Phosphonsäure pro Mol Base vorliegen. Die Konzentrationen an Säure und Base in Wasser können ebenfalls in weiten Bereichen frei gewählt werden; ein Vorteil der erfindungsgemäßen Zusammensetzungen liegt in ihrer guten Stabilität auch bei erhöhten Konzentrationen, sodaß für Verfahrensschritt a) die Summe aus Säure und Base, z.B. 40 bis 60 Gew.%, bezogen auf das Gesamtsystem betragen kann. Vorzugsweise bemißt man die Konzentration so, daß nach Verfahrensschritt b) (Methylolierung mit Formaldehyd) die Konzentration der methylolierten Salze in Wasser 40 bis 80 Gew.% beträgt, bzw. - im Fall einer ggf. gemäß Verfahrensschritt c) durchgeführten Veretherung - die Konzentration der nach Veretherung erhaltenen Summe aus veretherten und nicht veretherten methylolierten Salzen.

Die Salzbildung (Verfahrensschritt a)) führt man vorzugsweise bei einer Temperatur im Bereich von 40 bis 100 °C durch. Die Einhaltung dieses erhöhten Temperaturbereichs ist deshalb von Vorteil, weil die erhöhte Temperatur zur schnelleren Bildung von stabilen Lösungen der entsprechenden Salze beiträgt.

Die Salzbildung (Verfahrensschritt a)) und die nachfolgende Umsetzung mit Formaldehyd (Verfahrensschritt b)) können nach bekannten Methoden in dem Fachmann geläufigen Apparaturen durchgeführt werden, z.B. in einem mit Rührer und Innenthermometer ausgestatteten Reaktionsgefäß.

Für den Fall, daß ein Mono- oder Dialkylester der für Verfahrensschritt a) einzusetzenden Phosphonsäure leichter im Handel erhältlich ist als die freie Phosphonsäure selbst, kann auch von solchen Phosphonsäureestern ausgegangen werden. Diese können in einem kontinuierlich vorgeschalteten Verfahrensschritt zu der entsprechenden Phosphonsäure hydrolysiert werden. Zweckmäßigerweise verfährt man dabei so, daß man zu dem Ester nur die für die Hydrolyse erforderliche Menge Wasser oder einen kleinen Überschuß an Wasser gibt und die Hydrolyse bei erhöhter Temperatur in Gegenwart eines sauren Katalysators durchführt. Als Katalysator dient vorzugsweise die gleiche freie Phosphonsäure, wie sie bei der Hydrolyse gebildet wird. Es genügen katalytische Mengen, aber eine höhere Menge führt zu erhöhter Hydrolysegeschwindigkeit und schadet nicht, da im Fall der freien Phosphonsäure als Katalysator keine störenden Fremdsubstanzen eingebracht werden. Nach Durchführung der Hydrolyse kann der gebildete Alkohol abgetrennt werden, z.B. durch Destillation, und anschließend kann zu der freien Phosphonsäure diejenige Menge Wasser gegeben werden, die für Verfahrensschritt a) eingesetzt werden soll. Als Phosphonsäuremono- oder -dialkylester kommen vor allem Ester von Alkoholen mit 1 bis 4 C-Atomen in Betracht.

Für diese im vorhergehenden Absatz genannte Verfahrensweise verwendet man zweckmäßigerweise den Mono- oder Dimethylester der entsprechenden Phosphonsäure, vorzugsweise Methylphosphonsäuredimethylester, da das bei der Esterhydrolyse entstehende Methanol wegen seines niedrigen Siedepunkts vor Zugabe von Wasser leicht abgetrennt werden kann.

Eine bevorzugte Verfahrensvariante besteht darin, von Methylphosphonsäuredimethylester, einer katalytischen oder größeren Menge freier Methylphosphonsäure und der für die Hydrolyse erforderlichen Menge Wasser oder einem kleinen Überschuß an Wasser auszugehen, die Hydrolyse durchzuführen, das Methanol vollständig oder weitgehend zu entfernen, mit Wasser zu verdünnen und anschließend Verfahrensschritt a) durchzuführen.

Für Verfahrensschritt a) verwendet man als Base bevorzugt Dicyandiamid oder Guanylharnstoff oder ein Gemisch dieser beiden Basen. Diese Basen werden wegen ihres hohen Stickstoffgehalts

bevorzugt, der sich günstig auf die Effektivität der Flammfestausrüstung auswirkt.

Verfahrensschritt a) wird vorzugsweise nicht nur bei erhöhter Temperatur durchgeführt, sondern auch, indem man das Gemisch aus Säure und Base für eine Zeit von mindestens einer Stunde bei erhöhter Temperatur, d.h. zwischen 40 und 100 ° C, vorzugsweise 60 - 100 ° C hält. Noch günstiger ist es, das Gemisch für eine Zeit zwischen 3 Stunden bis 10 Stunden bei einer Temperatur im genannten Bereich zu halten, bevor man Verfahrensschritt b) (Umsetzung mit Formaldehyd) durchführt. Es hat sich nämlich gezeigt, daß mit längeren Verweilzeiten die Lagerstabilität der nach Schritt b) bzw. Schritt c) erhaltenen wäßrigen Zusammensetzungen weiter verbessert wird. Die im Einzelfall günstige Verweilzeit hängt von den Konzentrationen an Säure und Base, sowie von der Temperatur während der Durchführung von Verfahrensschritt a) ab. Während der genannten 3 bis 10 Stunden können noch Anteile der Base zugegeben werden; dies gilt für den Fall, daß man nach der unten erläuterten bevorzugten Ausführungsform arbeitet, bei der nicht die Gesamtmenge an Base von Anfang an eingesetzt wird.

Es hat sich als günstig erwiesen, Verfahrensschritt a) nicht so durchzuführen, daß von Anfang an die gesamten Mengen an Säure und Base in Wasser zusammengegeben werden. Vielmehr verfährt man zweckmäßigerweise so, daß man die gesamte Menge an Säure in Wasser vorlegt, diese Lösung auf die für Verfahrensschritt a) gewünschte Temperatur erwärmt und die Base anschließend langsam hinzufügt, entweder kontinuierlich oder portionsweise. Es hat sich gezeigt, daß bei langsamer Zugabe der Base die Stabilität der Reaktionsmischung zunimmt. Die Base gibt man portionsweise oder kontinuierlich vorzugsweise mit einer solchen Geschwindigkeit zu, daß die Temperatur des Reaktionsgemisches 100 ° C nicht übersteigt. Bei entsprechender guter Abführung der Neutralisationswärme kann daher die Base schneller zugegeben werden als bei weniger guter Wärmeabfuhr. Im Normalfall kann beim Arbeiten im technischen oder halbtechnischen Maßstab die Zeit der Basenzugabe mehrere Stunden betragen, falls die Temperatur 100 ° C nicht übersteigen soll.

Das nach Verfahrensschritt a) erhaltene Salz oder Salzgemisch wird zweckmäßigerweise direkt weiter mit Formaldehyd umgesetzt, d.h. es wird mit der nach Schritt a) erhaltenen wäßrigen Reaktionsmischung ohne die Isolierung des Salzes weiter gearbeitet. Der Formaldehyd kann in beliebiger Form, z.B. als Paraformaldehyd eingesetzt werden; zweckmäßigerweise verwendet man eine wäßrige Lösung, z.B. mit 30 Gew.% Formaldehyd. Die Umsetzung mit Formaldehyd (Methylolierung), bei der $-N-CH_2-OH$-Gruppen gebildet werden, wird zweckmäßigerweise so lange durchgeführt, bis nur noch unwesentliche Mengen an freiem Formaldehyd in der Reaktionsmischung enthalten sind. Es ist günstig, die Methylolierung bei einer Temperatur im Bereich von 40 bis 100 ° C durchzuführen.

Die Methylolierung kann, je nach ursprünglich eingesetzten Mengen von Säure und Base, im sauren oder alkalischen pH-Bereich durchgeführt werden, bevorzugt wird die Methylolierung bei pH 2,5 - 4 vorgenommen; falls auf Grund der für die Salzbildung eingesetzten Mengen an Säure und Base der pH-Wert höher als 4 ist, kann durch weitere Zugabe der entsprechenden Phosphonsäure der pH-Wert auf einen Wert von 2,5 bis 4 eingestellt werden.

Analysen von nach Verfahrensschritt b) erhaltenen Reaktionsmischungen ergaben für den Fall einer Methylolierung im sauren pH-Bereich, daß in den Zusammensetzungen Kondensationsprodukte enthalten sind. Diese werden vermutlich durch Wasserabspaltung aus $N-CH_2OH$-Gruppen gebildet, ggf. unter Beteiligung von $-NH_2$-Gruppen, wobei Produkte mit $-N-CH_2-N-$ oder $-N-CH_2-O-CH_2-N-$ Gruppierungen entstehen.

Erfindungsgemäße Zusammensetzungen mit besonders günstigen Eigenschaften bezüglich Lagerstabilität werden erhalten, wenn man bestimmte Werte für den Methylolierungsgrad der Salze einhält, nämlich durchschnittlich 0,3 bis 2 $-N-CH_2OH$-Gruppen pro Molekül Base. Dies läßt sich erreichen, indem man 0,3 bis 2 Mol Formaldehyd pro Mol ursprünglich eingesetzter Base verwendet. Ein noch günstigerer Bereich liegt zwischen 0,35 und 0,7 Mol Formaldehyd pro Mol Base. Die dabei erhaltenen Methylolierungsgrade von 0,35 bis 0,7 stellen Durchschnittswerte über eine größere Anzahl von Molekülen dar; Einzelmoleküle können wegen der statistischen Verteilung abweichende Werte aufweisen.

Falls gewünscht, können die bei Verfahrensschritt b) erhaltenen Umsetzungsprodukte (methylolierte Salze) in einem dritten Verfahrensschritt c) noch an den vorliegenden freien $-N-CH_2$ $OH$-Gruppen teilweise oder vollständig verethert werden, z.B. um das Ausmaß der Bildung von oben beschriebenen Kondensationsprodukten zu verringern. Zur Veretherung geeignet sind niedrige aliphatische, einwertige Alkohole mit 1 bis 4 Kohlenstoffatomen, insbesondere Methanol. Falls man vor Verfahrensschritt a) die Phosphonsäure aus dem Dimethylester einer Alkylphosphonsäure gebildet hatte, kann das durch Esterhydrolyse entstandene und nach Hydrolyse abdestillierte Methanol für die Veretherung wieder verwendet werden. Für die Veretherung ist die Verwendung eines sauren Katalysators zweckmäßig, geeignete Katalysatoren sind dem Fachmann bekannt.

Verfahrensschritt c) kann anschließend an Schritt b)

durch geführt werden. Für die Veretherung verwendet man vorzugsweise Reaktionsmischungen mit niedrigem Wassergehalt, z.B. mit weniger als 10 Gew.% Wasser. Ausschließend an die Veretherung wird die für die gewünschte Zusammensetzung erforderliche Menge Wasser wieder hinzugefügt, ggf. nach Neutralisation des sauren Veretherungskatalysators.
Als Katalysator für die Veretherung kann die gleiche Phosphonsäure verwendet werden, wie sie für Verfahrensschritt a) eingesetzt wurde; wenn dort ein Überschuß an freier Phosphonsäure verwendet wurde, ist es nicht mehr erforderlich, für die Veretherung nochmals einen Katalysator zuzusetzen.

Die erfindungsgemäßen Zusammensetzungen, welche die genannten methylolierten Salze bzw. Mischungen dieser Salze enthalten, eignen sich hervorragend zur Behandlung von Fasermaterialien, insbesondere von textilen Flächengebilden. Als Fasermaterialien kommen hierfür cellulosische Materialien, Wolle, und synthetische Fasern wie Polyester und Polyacrylnitril oder Mischungen aus diesen Fasern in Frage. Den Fasermaterialien wird durch diese erfindungsgemäßen Zusammensetzungen eine flammhemmende Ausrüstung vermittelt. Diese wäßrigen Zusammensetzungen können Lösungen der genannten Salze bzw. Salzgemische sein, es können auch wäßrige Dispersionen verwendet werden, welche außer den Salzen noch übliche, für die Textilausrüstung bekannte Substanzen, wie z.B. Weichgriffmittel, öl-und wasserabweisende Substanzen, Cellulosevernetzer und ggf. Dispergatoren enthalten. Die Zusammensetzungen können vor Anwendung auf die gewünschte Konzentration verdünnt werden, z.B. im Verhältnis 1:5.

Vorzugsweise verwendet man für die Ausrüstung der Fasermaterialien wäßrige Lösungen oder wäßrige Dispersionen, welche 5 bis 15 Gew.% der nach Schritt b) bzw. c) erhaltenen Umsetzungsprodukte enthalten. Die Behandlung textiler Flächengebilde aus Fasermaterialien läßt sich in günstiger Weise über einen üblichen Foulard-Prozeß durchführen.

Die Erfindung wird durch das nachfolgende Ausführungsbeispiel veranschaulicht.

Beispiel

In einem mit Rührer, Zulaufgefäß, Innenthermometer und Destillationsaufsatz versehenen Reaktionsgefäß wurde eine Mischung aus 2,66 kg Methylphosphonsäuredimethylester und 0,92 kg freier Methylphosphonsäure ohne zusätzliches Lösungsmittel auf ca. 140 °C erwärmt. Anschließend wurden 1,8 kg entmineralisiertes Wasser im Lauf von 21 Stunden kontinuierlich zugegeben, während die Innentemperatur auf etwa 140 °C gehalten wurde. Hierbei wurde kontinuierlich eine Mischung aus Methanol und Wasser abdestilliert. Nach beendeter Wasserzugabe wurde unter Fortsetzung des Abdestillierens das Gemisch noch 1,5 Stunden unter Rühren bei ca. 140 °C gehalten und dann auf ca. 120 °C abgekühlt. Das Methanol war danach praktisch vollständig entfernt.

Es wurden dann unter Rühren 3,42 kg entmineralisiertes Wasser schnell zugegeben und 15 Minuten weiter gerührt. Die erhaltene Lösung wurde während der nachfolgenden Zugabe von Dicyandiamid auf ca. 85 °C gehalten. Es wurden im Lauf von 300 Minuten portionsweise 2,2 kg Dicyandiamid von technischer Qualität als Feststoff zugegeben. Nach beendeter Zugabe wurde die Lösung noch 300 Minuten bei ca. 85 °C gehalten.

Anschließend erfolgte die Umsetzung mit Formaldehyd. Hierzu gab man zu der auf 85 °C gehaltenen Salzlösung 1,08 kg einer 37 Gew.%igen Lösung von Formaldehyd in Wasser. Die Zugabe erfolgte schnell, und die Lösung wurde anschließend noch 30 Minuten unter Rühren auf 85 °C gehalten, dann auf 30 °C abgekühlt und mit 2,1 kg Wasser verdünnt.

Man erhielt eine ca. 50%ige Lösung, deren pH-Wert bei 3 - 3,5 (Werte aus mehreren Ansätzen) lag. Die erhaltene Salzlösung war bei 0 °C mehrere Monate homogen und stabil (keine Ausfällungen); eine bei -20 °C eingefrorene Probe ergab nach dem Auftauen wieder eine stabile homogene Lösung.

Es wurde eine Flotte hergestellt, die 200 g/l einer nach obigen Angaben hergestellten Lösung und 800 g/l Wasser enthielt. Mit dieser Flotte wurden Gewebe aus 100% Baumwolle über einen Foulard-Prozeß behandelt (Flottenaufnahme ca. 100%, bezogen auf Gewebegewicht) und bei 110 °C getrocknet. In zwei weiteren Versuchen wurden unter sonst gleichen Bedingungen 220 g/l bzw. 240 g/l der Lösung eingesetzt. Alle Gewebeproben zeigten bei Brenntests gute Effekte bezüglich Flammfestausrüstung.

Es wurden für die Ermittlung der Vergilbungsneigung 3 Gewebeproben (a, bis c,) aus 100% Baumwolle jeweils mit einer Flotte behandelt, die 400 g/l der nach obigen Angaben hergestellten Lösung und 600 g/l Wasser enthielt. Die Behandlung erfolgte über Foulard (Flottenaufnahme nach Abquetschen ca. 100%, bezogen auf Gewebegewicht) bei einer Trockentemperatur von 110 °C. Probe a) wurde anschließend nicht weiter behandelt, Probe b) wurde 5 Minuten bei 150 °C und Probe c) 3 Minuten bei 170 °C nachbehandelt. Bei einem Test zur Beurteilung der Vergilbung ergab Probe a) den gleichen Wert wie eine unbehandelte Gewebeprobe. Die Proben b) und c) zeigten eine gewisse Vergilbungstendenz, die aber schwächer ausgeprägt war als bei einer Vergleichsprobe, die mit einer Flotte behandelt worden war, die ein nicht

- methyloliertes Salz enthielt, das ausgehend von Methylphosphonsäure und Dicyandiamid hergestellt worden war.

**Patentansprüche**

1. Wäßrige Zusammensetzung, herstellbar durch folgende Verfahrensschritte:
   a) Bildung eines Salzes oder Salzgemisches aus einer Phosphonsäure der allgemeinen Formel

   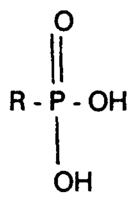

   worin R einen gesättigten Alkylrest mit 1 bis 4 Kohlenstoffatomen darstellt, oder einem Gemisch solcher Phosphonsäuren und einer Base oder einem Gemisch von Basen, ausgewählt aus Dicyandiamid, Guanylharnstoff, Harnstoff, Guanidin, Cyanamid und Melamin in Wasser als Lösungsmittel
   b) Umsetzung des bei Verfahrensschritt a) gebildeten Salzes oder Salzgemisches mit Formaldehyd
   c) gegebenenfalls teilweise oder vollständige Veretherung des bei Schritt b) gebildeten Umsetzungsprodukts.

2. Zusammensetzung nach Patentanspruch 1, dadurch gekennzeichnet, daß die Phosphonsäure vor Durchführung von Verfahrensschritt a) durch Hydrolyse aus Phosphonsäuremono- oder -dialkylester gebildet wurde.

3. Zusammensetzung nach Patentanspruch 2, dadurch gekennzeichnet, daß Methylphosphonsäuredimethylester eingesetzt und Methylphosphonsäure als Katalysator für die Hydrolyse verwendet wurde.

4. Zusammensetzung nach einem oder mehreren der Patentansprüche 1 bis 3, dadurch gekennzeichnet, daß die Salzbildung gemäß Verfahrensschritt a) bei einer Temperatur im Bereich von 40 bis 100 °C durchgeführt wurde.

5. Zusammensetzung nach einem oder mehreren der Patentansprüche 1 bis 4, dadurch gekennzeichnet, daß die Umsetzung mit Formaldehyd bei einer Temperatur im Bereich von 40 bis 100 °C durchgeführt wurde.

6. Zusammensetzung nach einem oder mehreren der Patentansprüche 1 bis 5, dadurch gekennzeichnet, daß Verfahrensschritt a) so durchgeführt wurde, daß man die gesamte Menge an Säure in Wasser vorlegt und die Base langsam kontinuierlich oder portionsweise hinzufügt.

7. Zusammensetzung nach einem oder mehreren der Patentansprüche 1 bis 6, dadurch gekennzeichnet, daß in Verfahrensschritt b) pro Mol ursprünglich eingesetzter Base 0,3 bis 2 Mol Formaldehyd, insbesondere 0,35 bis 0,7 Mol eingesetzt wurden.

8. Verwendung einer Zusammensetzung nach einem oder mehreren der Patentansprüche 1 bis 7 zur Behandlung von Fasermaterialien, insbesondere textilen Flächengebilden, wobei die Zusammensetzungen noch weitere, für die Behandlung von Fasermaterialien üblicherweise verwendete Produkte enthalten können.